# EUROPÄISCHE PATENTANMELDUNG

(11) **EP 1 338 878 A2**
(43) Veröffentlichungstag der Anmeldung: **27.08.2003**
(21) Anmeldenummer: 03001948.3
(22) Anmeldetag: 30.01.2003
(51) Int. Cl.: G01K 13/06, G01J 5/00

(54) **Verfahren zur Messung der Umgebungstemperatur sowie Temperaturmessanordnung**

(30) Priorität: 21.02.2002 DE 10207307; 26.03.2002 DE 10213392
(71) Anmelder: Mahlo GmbH & Co. KG, 93342 Saal (DE)
(72) Erfinder: Raum, Klaus, Dr., 85356 Freising (DE); Fella, Hans, 93047 Regensburg (DE)
(74) Vertreter: Meissner, Bolte & Partner

(57) **Zusammenfassung**

Die Erfindung betrifft ein Verfahren sowie eine Anordnung zur Messung der Umgebungstemperatur in schwer zugänglichen oder gefährdeten Bereichen, insbesondere in der Nähe von Stoff-, Papier- oder dergleichen Materialbahnen oder sonstigen geförderten Werkstücken oder Werkstoffen, deren mindestens eine Eigenschaft mit einer Methodik bestimmt wird, welche mindestens die unmittelbare Umgebungstemperatur als Vergleichs- oder Referenzwert benötigt. Erfindungsgemäß wird eine an sich bekannte pyrometrische Strahlungsmeßeinrichtung eingesetzt. Ein im thermischen Gleichgewicht mit der Umgebung stehender thermischer Strahler wird in unmittelbarer der Materialbahn positioniert. Über diesen thermischen Strahler erfolgt dann eine Erfassung des Wärmestrahlungsspektrums mittels des Pyrometers und damit eine mittelbare Umgebungstemperatur-Bestimmung.

## Beschreibung

Die Erfindung betrifft ein Verfahren zur Messung der Umgebungstemperatur gemäß Oberbegriff des Patentanspruchs 1 sowie eine Temperaturmeßanordnung zur Durchführung des Verfahrens gemäß Oberbegriff des Patentanspruchs 2.

Als elektrische und elektronische Temperatursensoren sind Thermoelemente, Widerstandsthermometer, Halbleiterelemente, aber auch faseroptische Sensoren in Gebrauch, die einen großen Temperaturbereich abdecken. Im allgemeinen werden derartige Sensoren als im umgebenden Medium angeordnete Meßfühler ausgebildet, die insbesondere über elektrische Leitungen mit Spannung und Strom versorgt werden.

Für Flächengewichts-Messungen an schnell geförderten Materialbahnen, wie Stoff-, Papier- und dergleichen Bahnen, ist aus Gründen der Meßgenauigkeit eine präzise Bestimmung der Temperatur der Umgebungsluft erforderlich. Hier sind die Einsatzmöglichkeiten der genannten außen liegenden Temperatursensoren begrenzt. Die Sensoren müssen nämlich über eine hinreichend kurze Ansprechzeit und daher über eine möglichst geringe Wärmekapazität verfügen und andererseits ausreichend robust ausgeführt werden, da diese in unmittelbarer Nähe zur Materialbahn, z.B. einer Bahn, die durch eine Textilveredelungs-Anlage in rauher Industrieumgebung geführt wird, installiert werden.

Mechanische Robustheit ist bei den bekannten Ausführungsformen im Regelfall mit einer massiveren Bauweise und damit einer zu hohen Wärmekapazität mit entsprechend langer Ansprechzeit verbunden.

In explosionsgefährdeten Räumen oder in unmittelbarer Nähe einer Materialbahn, welche brennbare Lösungsmitteldämpfe absondert, verbietet sich darüber hinaus der Einsatz elektrisch offenliegender Bauelemente oder es sind gesonderte Ex-Schutz-Maßnahmen erforderlich.

Pyrometrische Temperatursensoren, die ein Wärmestrahlungs-Spektrum zur Temperaturmessung nutzen und daher berührungslos arbeiten, können zur Messung der Temperatur der Umgebungsluft einer Materialbahn nicht ohne weiteres eingesetzt werden, da die Wärmestrahlungs-Charakteristiken von Gasen, vor allem durch deren sehr schlechte Übereinstimmung, mit dem Verhalten eines sogenanntes Schwarzen Strahlers eine präzise Temperaturbestimmung sehr schwierig gestalten.

Aus dem Vorgenannten ist es daher Aufgabe der Erfindung, ein Verfahren zur Messung von Umgebungstemperaturen, insbesondere in unmittelbarer Nähe von schnellaufenden, einer Flächengewichts-Messung unterzogenen Materialbahnen, und eine Vorrichtung zur Durchführung dieses Verfahrens anzugeben, welches bzw. welche in einfacher und kostengünstiger Weise in einem bereits bestehenden Fertigungs- und/oder Regelungsprozeß zu implementieren ist, das eine kurze Ansprechzeit der Temperaturmessung ermöglicht und welches bzw. welche eine exakte Temperaturmessung gewährleistet.

Die Lösung der Aufgabe der Erfindung erfolgt mit einem Verfahren in seiner Definition nach Patentanspruch 1 und mit einer Temperaturmeßanordnung zur Durchführung des Verfahrens gemäß den Merkmalen nach Patentanspruch 2, wobei die Unteransprüche mindestens zweckmäßige Ausgestaltungen und Weiterbildungen darstellen.

Erfindungsgemäß wird mittels einer pyrometrischen Strahlungsmeßeinrichtung die Temperatur eines in unmittelbarer Nähe der Materialbahn angeordneten und im thermischen Gleichgewicht mit der dortigen Umgebung stehenden flächigen Strahlers über dessen Wärmestrahlungs-Spektrum gemessen und somit die Temperatur des umgebenden und unmittelbar über der Materialbahn befindlichen Mediums indirekt bestimmt.

Da der Strahler im thermischen Gleichgewicht mit dem umgebenden Medium steht, weist er die gleiche Temperatur, aber eine gezielt verbesserte Strahlungscharakteristik auf. Es kann eine pyrometrische Temperaturmessung beabstandet zur Materialbahn erfolgen, wobei durch den flächigen Strahler sichergestellt ist, daß tatsächlich die Temperatur des umgebenden Mediums, z.B. Luft, und nicht die einer unerwünschten Hintergrund-Oberfläche bestimmt wird.

Anordnungsseitig ist der Strahler als eine im Wärmekontakt zur Umgebung stehende dünne Folie ausgebildet, die eine geringe Wärmekapazität und eine im Verhältnis zu ihrem Volumen große Wärmekontaktfläche mit dem umgebenden Medium aufweist. Dadurch wird eine geringe Ansprechzeit der gesamten Temperaturmeßanordnung erreicht, da die Folie in kurzer Zeit die Umgebungstemperatur annimmt.

Zur Abschirmung von ergebnisverfälschender Wärmestrahlung aus sonstigen unerwünschten Wärmequellen, insbesondere aus Richtung der Materialbahn, ist die Folie mindestens einseitig mit einer mindestens für den infraroten Spektralbereich des elektromagnetischen Spektrums undurchlässigen Beschichtung versehen. Auftreffende Wärmestrahlung von weiteren, neben der Umgebungsluft vorhandenen Wärmequellen wird durch diese Beschichtung reflektiert, dringt demzufolge nicht in das Folienmaterial ein und erwärmt somit die Folie nur in einem zu vernachlässigenden Maße.

Als abschirmende Beschichtung kommen hierbei insbesondere metallische Materialien in Betracht, die beispielsweise durch einen Aufdampf- oder ähnlichen Abscheideprozeß auf die Folie aufgetragen werden können. Metallische Schichten sind deshalb vorteilhaft, da diese im langwelligeren Bereich des elektromagnetischen Spektrums einen Reflexionskoeffizienten größer 90% besitzen.

Auf der dem pyrometrischen Strahlungsmeßgerät zugewandten Seite kann die dünne Folie mit einer den Emissionsfaktor der Folienoberfläche erhöhenden Beschichtung versehen sein. Die Beschichtung erfolgt hierbei in der Weise, daß sich die Strahlungscharakteristik der Folie möglichst der eines idealen Schwarzen Strahlers annähert.

Erfahrungsgemäß kommen für eine solche Beschichtung geeignete Lacke, insbesondere Carbonlacke in Betracht, bei denen sich eine größtmögliche Übereinstimmung mit der Strahlungscharakteristik eines Schwarzen Strahlers in durchgeführten Versuchen erwiesen hat.

Die gesamte Vorrichtung aus dünner Folie und pyrometrischem Strahlungsmeßgerät ist so ausgeführt, daß das Strahlungsmeßgerät räumlich getrennt zur dünnen Folie angeordnet ist. Der Abstand wird hierbei im wesentlichen nur durch die Abmessungen der Folienoberfläche und dem sich aus dem Pyrometerobjektiv ergebenden Öffnungswinkel bestimmt. Dadurch ist es möglich, Wartungs- und Reparaturarbeiten in besonders einfacher Weise zu gestalten, indem eine defekte Folie durch eine andere ersetzt werden kann.

Ebenso ist eine Messung der Umgebungstemperatur in unmittelbarer Nähe zur Materialbahn aus einer Distanz möglich, wobei sämtliche elektrischen Zuführungsleitungen außerhalb des Gehäuses,das das Pyrometer enthält entfallen.

Die pyrometrische Strahlungsmeßeinrichtung kann innerhalb eines separat angeordneten Gehäuses untergebracht sein, das mindestens auf einer der dünnen Folie zugewandten Seite ein für Strahlung im infraroten und langwelligeren Spektralbereich durchlässiges Fenster besitzt.

Durch die erfindungsgemäße Temperaturmeßanordnung ist es möglich, Umgebungstemperaturen in der Nähe geförderter und/oder bewegter Warenbahnen berührunslos zu bestimmen. Dies ist insbesondere dann von Vorteil, wenn die Umgebung der Bahn durch Lösungsmitteldämpfe oder sonstige Einflüsse belastet ist, was eine Standard-Temperaturmessung mit elektrischen Elementen ausschließt. Da die pyrometrische Meßeinrichtung außerhalb der zu vermessenden Umgebung angeordnet und die dünne Folie keine elektrischen Zuführungen benötigt, wird ein Unfallund Störungsrisiko vermieden.

Die Erfindung soll nachstehend anhand eines Ausführungsbeispiels sowie unter Zuhilfenahme von Figuren näher erläutert werden.

Hierbei zeigen:
- Fig. 1a: eine schematische Darstellung einer dünnen Folie, insbesondere deren Schichtaufbau auf einer einem pyrometrischen Strahlungmeßgerät zugewandten Seite;
- Fig. 1b: eine schematische Darstellung einer dünnen Folie, insbesondere deren Schichtaufbau auf einer dem pyrometrischen Strahlungsmeßgerät abgewandten Seite; und
- Fig. 2: eine Gesamtansicht einer erfindungsgemäßen Temperaturmeßanordnung.

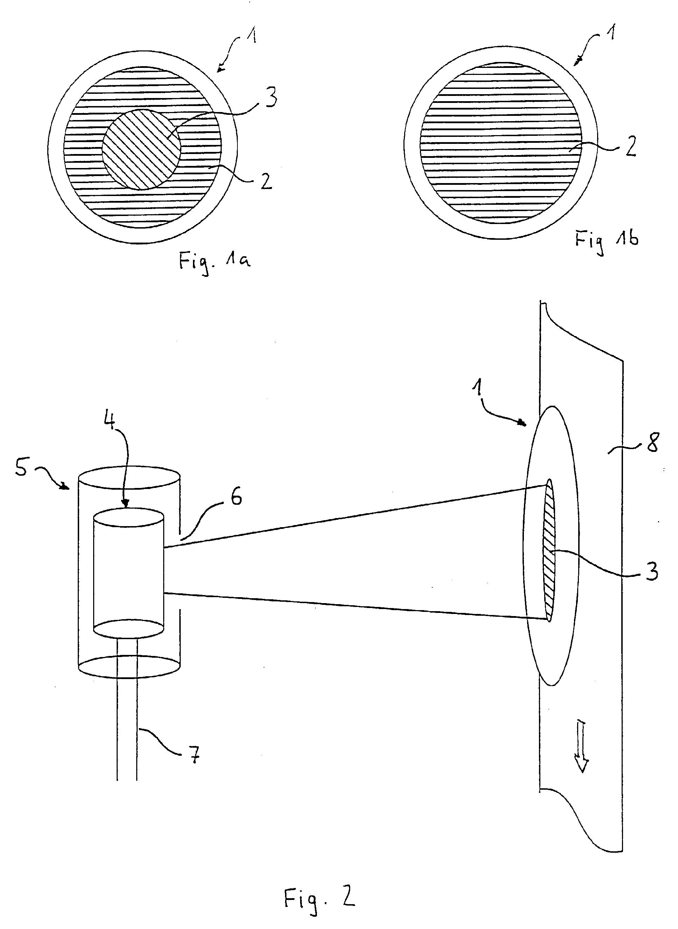

Die Fig. 1a und 1b zeigen eine schematische Darstellung einer in unmitelbare Nähe zu einer nicht dargestellten Materialbahn angeordneten dünnen Folie, insbesondere im Hinblick auf deren Schichtaufbau bzw. Beschichtung.
Die dünne Folie 1 weist eine infrarote Strahlung reflektierende Metallbeschichtung 2 auf. Diese abschirmende Beschichtung ist zweckmäßigerweise aufgedampft und so ausgeführt, daß deren Schichtdickte ein Eindringen von aus nicht vom umgebenden Medium stammender Wärmeenergie in das Folienmaterial verhindert. Hier genügt bereits eine Schichtdicke von wenigen Mikrometern, sofern die abschirmende Schicht aus einem Material mit einer hohen metallischen Leitfähigkeit und damit einem hohen Reflexionsvermögen im infraroten Spektralbereich besteht. Beispielsweise kann die Schicht aus Silber oder Aluminium ausgeführt sein. Die Metallbeschichtung 2 ist vorteilhaft beidseitig auf der dünnen Folie ausgebildet.

Eine den Emissionsfaktor erhöhende Beschichtung ist im wesentlichen im Zentrum bevorzugt auf einer Seite der dünnen Folie befindlich. An diese Beschichtung wird die Anforderung gestellt, daß die Strahlungscharakteristik der Folienoberfläche im beschichteten Bereich der Strahlungscharakteristik eines Schwarzen Strahlers mit maximalem Emissionsvermögen möglichst nahekommt.
Da maximales Emissionsvermögen mit einer maximalen Absorption einhergeht, muß diese Beschichtung schwarz und matt ausgeführt werden. Vorteilhaft ist hier eine Carbonlackbeschichtung 3. Diese emissionsfördernde Beschichtung wird zweckmäßigerweise auf der dem Pyrometer zugewandten Seite der dünnen Folie aufgebracht, wie dies aus dem bildlichen Vergleich der Fig. 1a und 1b hervorgeht.

In Fig. 2 ist eine Anordnung aus einem pyrometrischen Strahlungsmeßgerät 4 und einer dünnen Folie 1 dargestellt. Die dünne Folie 1 steht im thermischen Gleichgewicht mit der Umgebung, z.B. Luft, und strahlt über die Carbonlackbeschichtung 3 ein der Umgebungstemperatur entsprechendes Wärmestrahlungsspektrum ab, welches vom pyrometrischen Strahlungsmeßgerät 4 detektiert wird. Die dünne Folie 1 und das pyrometrische Strahlungsmeßgerät 4 sind räumlich getrennt. Der Abstand zwischen beiden Komponenten der Meßanordnung ist im wesentlichen nur durch den Öffnungswinkel bestimmt, der seinerseits apparativ durch ein Objektiv des pyrometrischen Strahlungsmeßgeräts 4 und der Empfindlichkeit des Geräts selbst vorgegeben ist. Das Strahlungsmeßgerät 4 als der eigentliche Temperaturdetektor befindet sich somit außerhalb der unmittelbaren Umgebung der Materialbahn 8.

Zusätzlich ist das Strahlungsmeßgerät 4 in einem gekapselten Gehäuse 5 angeordnet, das insbesondere eine explosionsgeschützte Zuführungsmöglichkeit für elektrische Leitungen 7 aufweist. In Richtung der dünnen Folie 1 weist das Gehäuse 5 ein für Wärmestrahlung im zu erwartenden Spektralbereich durchlässiges Fenster 6 auf, welches auf den Öffnungswinkel des pyrometrischen Strahlungsmeßgeräts in der Weise abgestimmt ist, daß die emissionsoptimierte Beschichtung 3 der dünnen Folie 1 in optimaler Weise auf das Objektiv des pyrometrischen Strahlungsmeßgeräts 4 abgebildet wird.

In einer Alternative kann anstelle einer metallbeschichteten Folie eine Metallfolie selbst zum Einsatz kommen, die auf einer Seite die vorerwähnte emissionsoptimierte Beschichtung 3 aufweist.

Erfindungswesentlich ist, dass der thermische Kontakt zum Gehäuse sehr schlecht gestaltet werden kann, während die Fläche zum Wärmeaustausch mit der Umgebung gleichzeitig sehr groß ist. Der Einfluß der Temperatur der Halterung der Folie ist daher außerordentlich gering.

### Bezugszeichenliste

- 1: dünne Folie
- 2: abschirmende Beschichtung
- 3: emissionsfördernde Beschichtung
- 4: pyrometrisches Strahlungsmeßgerät
- 5: Gehäuse
- 6: Fenster
- 7: elektrische Zuführungen
- 8: Materialbahn

## Patentansprüche

1. Verfahren zur Messung der Umgebungstemperatur in unmittelbarer Nähe von, auch schnelllaufenden, Stoff-, Papier- oder dergleichen Materialbahnen oder sonstigen geförderten Werkstücken oder Werkstoffen, deren mindestens eine Eigenschaft mit einer Methodik bestimmt wird, welche mindestens die unmittelbare Umgebungstemperatur als Vergleichs- oder Referenzwert benötigt, sowie unter Verwendung eines pyrometrischen Strahlungsmeßgeräts,
**dadurch gekennzeichnet, daß**
ein im thermischen Gleichgewicht mit dem umgebenden Medium stehender flächiger thermischer Strahler, der mit einer, ein Eindringen von nicht vom umgebenden Medium stammender Wärmeenergie verhindernden, abschirmenden Beschichtung sowie mit einer gezielt verbesserten Strahlungscharakteristik versehen ist, in unmittelbarer Nähe der Materialbahn angeordnet wird, wobei über das Wärmestrahlungsspektrum des flächigen Strahlers eine indirekte Temperaturbestimmung des umgebenden und unmittelbar über der Materialbahn befindlichen gasförmigen Mediums erfolgt.

2. Temperaturmeßanordnung zur Durchführung des Verfahrens nach Anspruch 1,
**dadurch gekennzeichnet, daß**
der Strahler als eine in unmittelbarer Nähe einer Materialbahn angeordnete, im Wärmekontakt zur gasförmigen Umgebung stehende dünne Folie (1) geringer Wärmekapazitit, großer Wärmestrahlungsfläche und großer Wärmeaustauschfläche ausgebildet ist, zur Abschirmung gegen Wärmestrahlung weiterer, unerwünschter Wärmequellen, auch von der Materialbahn selbst, die Oberfläche der Folie (1) mindestens einseitig mit einer mindestens für den infraroten Spektralbereich undurchlässigen, reflektierenden Beschichtung versehen ist oder aus einem solchen Material besteht und das Strahlungsmeßgerät räumlich getrennt zur dünnen Folie angeordnet ist.

3. Temperaturmeßanordnung nach Anspruch 2,
**dadurch gekennzeichnet, daß**
die reflektierende Beschichtung eine Metallschicht (2) ist.

4. Temperaturmeßanordnung nach Anspruch 3,
**dadurch gekennzeichnet, daß**
die dünne Folie (1) mindestens auf der dem pyrometrischen Strahlungsmeßgerät (4) zugewandten Seite eine Beschichtung mit bekanntem und temperaturunabängigem Emissionsfaktor aufweist.

5. Temperaturmeßanordnung nach Anspruch 4,
**dadurch gekennzeichnet, daß**
die den Emissionsfaktor erhöhende Beschichtung aus einer Lack-, insbeondere Carbonlackbeschichtung (3) besteht.

6. Temperaturmeßanordnung nach einem der Ansprüche 2 bis 5,
**dadurch gekennzeichnet, daß**
das pyromerische Strahlungsmeßgerät (4) als selbständige Einheit räumlich getrennt zur dünnen Folie (1) in einem im wesentlichen durch die Abmessungen und damit den Öffnungswinkel des Pyrometerobjektivs definierten Abstand angeordnet ist.

7. Temperaturmeßanordnung nach Anspruch 7,
**dadurch gekennzeichnet, daß**
das pyrometrische Strahlungsmeßgerät innerhalb eines Gehäuses (5) angeordnet ist, welches auf einer der dünnen Folie (1) zugewandten Seite ein mindestens für infrarote Strahlung durchlässiges Fenster (6) aufweist.

8. Temperaturmeßanordnung nach einem der Ansprüche 2 bis 7,
**dadurch gekennzeichnet, daß**
die Anordnung aus dünner Folie (1) und pyrometrischem Strahlungsmeßgerät (4) zur Messung der Umgebungstemperatur an schnelllaufenden und/oder geförderten textilen Warenbahnen, deren Flächengewicht laufend zu bestimmen ist, angewendet wird.
